(19) Europäisches Patentamt
European Patent Office
Office européen des brevets

(11) **EP 4 321 562 A1**

(12) **EUROPEAN PATENT APPLICATION**
published in accordance with Art. 153(4) EPC

(43) Date of publication:
**14.02.2024 Bulletin 2024/07**

(21) Application number: **22784634.2**

(22) Date of filing: **31.03.2022**

(51) International Patent Classification (IPC):
**C08J 5/04** (2006.01)   **C08G 18/40** (2006.01)
**C08G 18/75** (2006.01)   **B29C 70/06** (2006.01)

(52) Cooperative Patent Classification (CPC):
**B29C 70/06; C08G 18/40; C08G 18/75; C08J 5/04**

(86) International application number:
**PCT/JP2022/016618**

(87) International publication number:
**WO 2022/215650 (13.10.2022 Gazette 2022/41)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **09.04.2021 JP 2021066758**

(71) Applicant: **Mitsui Chemicals, Inc.**
**Tokyo 104-0028 (JP)**

(72) Inventors:
• **TAKANO, Ryo**
  **Sodegaura-shi, Chiba 299-0265 (JP)**
• **KUROIWA, Satoshi**
  **Sodegaura-shi, Chiba 299-0265 (JP)**
• **KOBAYASHI, Takeshi**
  **Sodegaura-shi, Chiba 299-0265 (JP)**

(74) Representative: **Hoffmann Eitle**
**Patent- und Rechtsanwälte PartmbB**
**Arabellastraße 30**
**81925 München (DE)**

(54) **FIBER-REINFORCED RESIN SHEET**

(57)    A fiber-reinforced resin sheet includes a fiber assembly including a reinforcing fiber; and a thermoplastic polyurethane resin impregnated in at least one surface of the fiber assembly. The thermoplastic polyurethane resin contains a reaction product of a polyol component and a polyisocyanate component including a monocyclic alicyclic polyisocyanate.

**Description**

TECHNICAL FIELD

The present invention relates to a fiber-reinforced resin sheet.

BACKGROUND ART

Conventionally, fiber-reinforced plastic is known. The fiber-reinforced plastic includes fibers and resins impregnated in the fibers. A molded product of fiber-reinforced plastic has excellent strength. Further, the molded product of fiber-reinforced plastic is difficult to bend.

Meanwhile, depending on the use, the fiber-reinforced plastic may be required to have the property of easily bending (bendability). And, it may also be required to have the property of easily recovering after bending (bending recovery). Therefore, as the fiber-reinforced plastic, a resin-impregnated reinforcing fiber sheet has been studied. The resin-impregnated reinforcing fiber sheet is a composite sheet formed of a woven fabric made of reinforcing fiber impregnated with a thermoplastic resin.

For the resin-impregnated reinforcing fiber sheet, more specifically, the following carbon fiber-reinforced resin processed sheet has been proposed. This carbon fiber-reinforced resin processed sheet is produced by laminating a thermoplastic elastomer film or rubber film on both sides of a carbon fiber fabric. As the thermoplastic elastomer, a polyurethane-based thermoplastic elastomer is exemplified (see, for example, Patent Document 1).

Citation List

Patent Document

Patent Document 1: Japanese Unexamined Patent Publication No. 2016-179667

SUMMARY OF THE INVENTION

PROBLEM TO BE SOLVED BY THE INVENTION

When an industrially available polyurethane-based thermoplastic elastomer (e.g., MDI-based elastomer) is used in the carbon fiber-reinforced resin processed sheet, bendability and bending recovery are excellent, but heat resistance and weather resistance may not be sufficient.

The present invention provides a fiber-reinforced resin sheet excellent in heat resistance and weather resistance.

MEANS FOR SOLVING THE PROBLEM

The present invention [1] includes a fiber-reinforced resin sheet including a fiber assembly including a reinforcing fiber; and a thermoplastic polyurethane resin impregnated in at least one surface of the fiber assembly, in which the thermoplastic polyurethane resin contains a reaction product of a polyol component and a polyisocyanate component including a monocyclic alicyclic polyisocyanate.

The present invention [2] includes the fiber-reinforced resin sheet described in [1], in which the monocyclic alicyclic polyisocyanate contains 1,4-bis(isocyanatomethyl)cyclohexane and/or 1,3-bis(isocyanatomethyl)cyclohexane.

The present invention [3] includes the fiber-reinforced resin sheet described in [1] or [2], in which the 1,4-bis(isocyanatomethyl)cyclohexane and/or the 1,3-bis(isocyanatomethyl)cyclohexane contain(s) a trans isomer in a proportion of 80% by mol or more.

The present invention [4] includes the fiber-reinforced resin sheet described in any one of the above-described [1] to [3], in which the polyol component has a number average molecular weight of 400 or more and 3000 or less.

The present invention [5] includes the fiber-reinforced resin sheet described in any one of the above-described [1] to [4], in which the thermoplastic polyurethane resin has a hard segment concentration of 8% by mass or more and 55% by mass or less.

The present invention [6] includes the fiber-reinforced resin sheet described in any one of the above-described [1] to [5], in which the thermoplastic polyurethane resin has a urethane group concentration of 1.7 mmol/g or more and 4.5 mmol/g or less.

The present invention [7] includes the fiber-reinforced resin sheet described in any one of the above-described [1] to [6], in which the thermoplastic polyurethane resin satisfies the following formula (1).

Formula (1): 0 < [Calorific value (mJ/mg) at recrystallization peak of urethane

group/exothermic section (°C)] < 0.85

The present invention [8] includes the fiber-reinforced resin sheet described in any one of the above-described [1] to [7], in which the reinforcing fiber includes carbon fiber and/or aramid fiber.

EFFECTS OF THE INVENTION

The fiber-reinforced resin sheet of the present invention includes a thermoplastic polyurethane resin. The thermoplastic polyurethane resin contains a reaction product of a polyol component and a polyisocyanate component including a monocyclic alicyclic polyisocyanate. Therefore, the fiber-reinforced resin sheet has excellent heat resistance and weather resistance.

DESCRIPTION OF THE EMBODIMENTS

The fiber-reinforced resin sheet of the present invention includes a fiber assembly including a reinforcing fiber; and a thermoplastic polyurethane resin impregnated in at least one surface of the fiber assembly.

Examples of the reinforcing fiber include carbon fiber, glass fiber, aramid fiber, alumina fiber, silicon carbide fiber, boron fiber, metal fiber, and cellulose nanofiber. These reinforcing fibers can be used alone or in combination of two or more. For the reinforcing fiber, preferably, carbon fiber, glass fiber, and aramid fiber are used, more preferably, carbon fiber and aramid resin are used. That is, the reinforcing fiber preferably includes carbon fiber and/or aramid fiber. The use of carbon fiber and/or aramid fiber makes it possible to improve mechanical properties. For the reinforcing fiber, particularly preferably, carbon fiber is used. The use of carbon fiber makes it possible to improve designability.

Examples of the carbon fiber include a pitch-based carbon fiber, a polyacrylonitrile (PAN)-based carbon fiber, and a rayon-based carbon fiber. These carbon fibers can be used alone or in combination of two or more. For the carbon fiber, preferably, a PAN-based carbon fiber is used.

The fiber assembly including the reinforcing fiber is formed by molding a fiber material including the reinforcing fiber into a sheet form by a known method. The fiber material may contain fibers other than the reinforcing fiber at an appropriate ratio. The fiber material preferably contains only the reinforcing fiber. That is, the fiber assembly preferably consists of the reinforcing fiber.

Examples of the fiber assembly including the reinforcing fiber include woven fabrics, knitted fabrics, felts, nonwoven fabrics, and uni-directional materials. These can be used alone or in combination of two or more. For the fiber assembly, in view of bending recovery, preferably, a woven fabric is used.

A method for producing the woven fabric is not particularly limited, and examples of the method include plain weave, twill weave, satin weave, meander pattern (saya) weave, and checkered pattern weave. Examples of the woven fabric include plain weave fabric, twill weave fabric, satin weave fabric, meander pattern (saya) weave fabric, and checkered pattern fabric. Examples of the woven fabric also include a uniaxial fabric and a multiaxial fabric. These can be used alone or in combination of two or more. For the woven fabric consisting of the reinforcing fiber, preferably, a plain weave fabric and a twill weave fabric are used.

The thermoplastic polyurethane resin can be obtained as a reaction product by subjecting a polyurethane resin composition including a polyisocyanate component and a polyol component to reaction and curing. That is, the polyurethane resin is a cured product of the polyurethane resin composition.

The polyisocyanate component contains a monocyclic alicyclic polyisocyanate as an essential component. For the monocyclic alicyclic polyisocyanate, a monocyclic alicyclic polyisocyanate monomer and a monocyclic alicyclic polyisocyanate derivative are used.

The monocyclic alicyclic polyisocyanate monomer is a polyisocyanate monomer containing one aliphatic ring in one molecule. For the monocyclic alicyclic polyisocyanate monomer, a monocyclic alicyclic diisocyanate is used. Examples of the monocyclic alicyclic diisocyanate include 1,4-cyclopentene diisocyanate, 1,3-cyclohexane diisocyanate, 1,4-cyclohexane diisocyanate, 1,4-bis(isocyanatomethyl)cyclohexane, 1,3-bis(isocyanatomethyl)cyclohexane, and isophorone diisocyanate. These can be used alone or in combination of two or more.

For the monocyclic alicyclic polyisocyanate derivative, a modified product of the monocyclic alicyclic polyisocyanate monomer is used. Examples of the modified product include uretdione-modified product, isocyanurate-modified product, allophanate-modified product, polyol-modified product, biuret-modified product, urea-modified product, oxadiazinetrione-modified product, and carbodiimide-modified product. These can be used alone or in combination of two or more.

For the monocyclic alicyclic polyisocyanate, preferably, a monocyclic alicyclic polyisocyanate monomer is used, more preferably, 1,4-bis(isocyanatomethyl)cyclohexane and 1,3-bis(isocyanatomethyl)cyclohexane are used. In other words, the monocyclic alicyclic polyisocyanate preferably contains a monocyclic alicyclic polyisocyanate monomer, more preferably, contains 1,4-bis(isocyanatomethyl)cyclohexane and/or 1,3-bis(isocyanatomethyl)cyclohexane. When the monocyclic alicyclic polyisocyanate contains 1,4-bis(isocyanatomethyl)cyclohexane and/or 1,3-bis(isocyanatomethyl)cyclohexane, a fiber-reinforced resin sheet having excellent mechanical strength can be obtained.

The 1,4-bis(isocyanatomethyl)cyclohexane is classified into cis-1,4-bis(isocyanatomethyl)cyclohexane and trans-1,4-bis(isocyanatomethyl)cyclohexane. In the following, the cis-1,4-bis(isocyanatomethyl)cyclohexane is referred to as cis isomer or cis-1,4 isomer. The trans-1,4-bis(isocyanatomethyl)cyclohexane is referred to as trans isomer or trans-1,4 isomer. A total amount of the trans-1,4 isomer and the cis-1,4 isomer is 100% by mol.

The 1,4-bis(isocyanatomethyl)cyclohexane preferably contains the trans-1,4 isomer. The content of the trans-1,4 isomer relative to a total amount in mol of the 1,4-bis(isocyanatomethyl)cyclohexane is, for example, 60% by mol or more, preferably 70% by mol or more, more preferably 75% by mol or more, further preferably 80% by mol or more. The content of the trans-1,4 isomer relative to the total amount in mol of the 1,4-bis(isocyanatomethyl)cyclohexane is, for example, 99.5% by mol or less, preferably 99% by mol or less, more preferably 96% by mol or less, further preferably 90% by mol or less. When the content of the trans-1,4 isomer exceeds the above-described lower limit, excellent heat resistance is obtained.

In other words, the content of the cis-1,4 isomer relative to the total amount in mol of the 1,4-bis(isocyanatomethyl)cyclohexane is, for example, 0.5% by mol or more, preferably 1% by mol or more, more preferably 4% by mol or more, further preferably 10% by mol or more. The content of the cis-1,4 isomer relative to the total amount in mol of the 1,4-bis(isocyanatomethyl)cyclohexane is, for example, 40% by mol or less, preferably 30% by mol or less, more preferably 25% by mol or less, further preferably 20% by mol or less.

The 1,4-bis(isocyanatomethyl)cyclohexane is produced by a known method. The production method is described in, for example, International Publication Nos. WO 2009/051114 and WO 2019/069802.

The 1,3-bis(isocyanatomethyl)cyclohexane is classified into cis-1,3-bis(isocyanatomethyl)cyclohexane and trans-1,3-bis(isocyanatomethyl)cyclohexane. In the following, the cis-1,3-bis(isocyanatomethyl)cyclohexane is referred to as cis isomer or cis-1,3 isomer. The trans-1,3-bis(isocyanatomethyl)cyclohexane is referred to as trans isomer or trans-1,3 isomer. A total amount of the trans-1,3 isomer and the cis-1,3 isomer is 100% by mol.

The 1,3-bis(isocyanatomethyl)cyclohexane preferably contains the trans-1,3 isomer. The content of the trans-1,3 isomer relative to a total amount in mol of the 1,3-bis(isocyanatomethyl)cyclohexane is, for example, 50% by mol or more, preferably 80% by mol or more. The content of the trans-1,3 isomer relative to the total amount in mol of the 1,3-bis(isocyanatomethyl)cyclohexane is, for example, 99.5% by mol or less, preferably 99% by mol or less. When the content of the trans-1,3 isomer exceeds the above-described lower limit, excellent heat resistance is obtained.

In other words, the content of the cis-1,3 isomer relative to the total amount in mol of the 1,3-bis(isocyanatomethyl)cyclohexane is, for example, 0.5% by mol or more, preferably 1% by mol or more. The content of the cis-1,3 isomer relative to the total amount in mol of the 1,3-bis(isocyanatomethyl)cyclohexane is, for example, 50% by mol or less, preferably 20% by mol or less.

The 1,3-bis(isocyanatomethyl)cyclohexane is produced by a known method.

For the monocyclic alicyclic polyisocyanate, further preferably, 1,4-bis(isocyanatomethyl)cyclohexane is used. When the monocyclic alicyclic polyisocyanate contains 1,4-bis(isocyanatomethyl)cyclohexane, a fiber-reinforced resin sheet having particularly excellent mechanical strength is obtained. The monocyclic alicyclic polyisocyanate further preferably consists of 1,4-bis(isocyanatomethyl)cyclohexane.

The polyisocyanate component can contain other polyisocyanates as optional components without inhibiting the excellent effect of the present invention. Other polyisocyanates are polyisocyanates except the monocyclic alicyclic polyisocyanate. Examples of other polyisocyanates include polycyclic alicyclic polyisocyanate, chain aliphatic polyisocyanate, aromatic polyisocyanate, and araliphatic polyisocyanate.

For the polycyclic alicyclic polyisocyanate, a polycyclic alicyclic polyisocyanate monomer and a derivative thereof are used. The polycyclic alicyclic polyisocyanate monomer is a polyisocyanate monomer containing two aliphatic rings in one molecule. Examples of the polycyclic alicyclic polyisocyanate monomer include polycyclic alicyclic diisocyanate. Examples of the polycyclic alicyclic diisocyanate include norbornene diisocyanate and methylene bis(cyclohexyl isocyanate). For the derivative thereof, various modified products of those described above are used. These can be used alone or in combination of two or more.

For the chain aliphatic polyisocyanate, a chain aliphatic polyisocyanate monomer and a derivative thereof are used. Examples of the chain aliphatic polyisocyanate monomer include chain aliphatic diisocyanate. Examples of the chain aliphatic diisocyanate include ethylene diisocyanate, trimethylene diisocyanate, tetramethylene diisocyanate, pentamethylene diisocyanate (PDI), and hexamethylene diisocyanate (HDI). For the derivative thereof, various modified products of those described above are used. These can be used alone or in combination of two or more.

For the aromatic polyisocyanate, an aromatic polyisocyanate monomer and a derivative thereof are used. Examples of the aromatic polyisocyanate monomer include aromatic diisocyanate. Examples of the aromatic diisocyanate include diphenylmethane diisocyanate (MDI), tolylene diisocyanate (TDI), toluidine diisocyanate (TODI), paraphenylene diisocyanate, and naphthalene diisocyanate (NDI). For the derivative thereof, various modified products of those described above are used. These can be used alone or in combination of two or more.

For the araliphatic polyisocyanate, an araliphatic polyisocyanate monomer and a derivative thereof are used. Examples of the araliphatic polyisocyanate monomer include araliphatic diisocyanate. Examples of the araliphatic diisocyanate include xylylene diisocyanate (XDI) and tetramethylxylylene diisocyanate (TMXDI). For the derivative thereof, various modified products of those described above are used. These can be used alone or in combination of two or more.

Other polyisocyanates can be used alone or in combination of two or more. The content of other polyisocyanates is appropriately set in accordance with its purpose and use. More specifically, the content of other polyisocyanates relative to a total amount of the polyisocyanate component is, for example, less than 50% by mol, preferably 30% by mol or less, more preferably 10% by mol or less, further preferably 5% by mol or less, particularly preferably 0% by mol.

In other words, the content of the monocyclic alicyclic polyisocyanate relative to the total amount of the polyisocyanate component is, for example, more than 50% by mol, preferably 70% by mol or more, more preferably 90% by mol or more, further preferably 95% by mol or more, particularly preferably 100% by mol.

Specifically, the polyisocyanate component preferably does not contain other polyisocyanates. That is, the polyisocyanate component preferably consists of the monocyclic alicyclic polyisocyanate.

The polyol component is a compound containing two or more hydroxy groups in a molecule. Examples of the polyol component include low molecular weight polyols and macropolyols.

The low molecular weight polyol is an organic compound having two or more hydroxy groups in a molecule and having a relatively low molecular weight. The low molecular weight polyol has a molecular weight of, for example, 40 or more, and for example, less than 400, preferably less than 300.

Examples of the low molecular weight polyol include dihydric alcohol, trihydric alcohol, and tetra- or higher hydric alcohol. Examples of the dihydric alcohol include ethylene glycol, 1,2-propanediol, 1,3-propanediol, 1,2-butanediol, 1,3-butanediol, 1,4-butanediol, 1,5-pentanediol, 1,6-hexanediol, neopentyl glycol, diethylene glycol, triethylene glycol, and dipropylene glycol. Examples of the trihydric alcohol include glycerin and trimethylolpropane. Examples of the tetra- or higher hydric alcohol include pentaerythritol and diglycerol. For the low molecular weight polyol, polymerization products obtained by addition polymerization of alkylene (C2-3) oxide with dihydric to tetrahydric alcohols so as to have a number average molecular weight of less than 400 are used.

These low molecular weight polyols can be used alone or in combination of two or more. For the low molecular weight polyol, preferably, dihydric alcohol and trihydric alcohol are used, more preferably, dihydric alcohol is used.

The macropolyol is an organic compound having two or more hydroxy groups in a molecule and having a relatively high molecular weight. The macropolyol has a number average molecular weight of, for example, 400 or more, preferably 500 or more. The number average molecular weight of the macropolyol is, for example, 5000 or less, preferably 3000 or less, more preferably less than 2500, further preferably 2200 or less, particularly preferably 1750 or less. When the number average molecular weight of the macropolyol is the above-described upper limit or less, the transparency of the fiber-reinforced resin sheet is improved, which makes it possible to improve visibility of a design with fiber. The macropolyol has an average functionality (average number of hydroxy groups) of, for example, 2 or more. Further, the average functionality (average number of hydroxy groups) of the macropolyol is, for example, 6 or less, preferably 4 or less, more preferably 3 or less.

Examples of the macropolyol include polyether polyol, polyester polyol, polycarbonate polyol, polyurethane polyol, epoxy polyol, vegetable oil polyol, polyolefin polyol, acrylic polyol, and vinyl monomer modified polyol. For the macropolyol, preferably, polyether polyol, polyester polyol, and polycarbonate polyol are used.

Examples of the polyether polyol include polyoxyalkylene polyol. Examples of the polyoxyalkylene polyol include polyoxyalkylene (C2-3) polyol, and polytetramethylene ether polyol.

Examples of the polyester polyol include condensation polyester polyol and ring-opening polyester polyol. Examples of the condensation polyester polyol include adipate-based polyester polyol and phthalic acid-based polyester polyol. Examples of the ring-opening polyester polyol include lactone-based polyester polyol.

Examples of the polycarbonate polyol include a ring-opening polymerization product of ethylene carbonate using the above-described low molecular weight polyols as an initiator.

These macropolyols can be used alone or in combination of two or more. For the macropolyol, in view of heat resistance, particularly preferably, polyether polyol is used. Also, in view of weather resistance, particularly preferably, polycarbonate polyol is used.

The macropolyols can be classified into crystalline macropolyols and amorphous macropolyols. The crystalline macropolyol is a macropolyol which is solid at 25°C. The amorphous macropolyol is a macropolyol which is liquid at 25°C.

For the macropolyol, particularly preferably, crystalline macropolyol is used. The use of crystalline macropolyol provides particularly excellent elasticity, which in turn improves texture of the fiber-reinforced resin sheet. This is due to the fact that when a crystalline polyol is used, the thermoplastic polyurethane resin has a lower tan δ compared to when an amorphous polyol is used. The tan δ can be calculated by measurement of dynamic viscoelasticity. The dynamic viscoelasticity is measured using a dynamic viscoelasticity measuring apparatus under conditions of a tension mode, a gauge length of 20 mm, a heating rate of 5°C/min, and a measurement frequency of 10 Hz.

On the other hand, the use of amorphous macropolyol for the macropolyol provides excellent bending recovery.

The polyol components can be used alone or in combination of two or more. For the polyol component, preferably, a low molecular weight polyol and a macropolyol are used in combination.

When a low molecular weight polyol and a macropolyol are used in combination, their amounts are appropriately set in accordance with its purpose and use. Preferably, the amounts of the low molecular weight polyol and the macropolyol used in combination are adjusted so that the thermoplastic polyurethane resin has a hard segment concentration in the range described below. Also, preferably, the amounts of the low molecular weight polyol and the macropolyol used in combination are adjusted so that the thermoplastic polyurethane resin has a urethane group concentration in the range described below.

For example, the low molecular weight polyol is used in an amount of 10 parts by mass or more, preferably 30 parts by mass or more, more preferably 50 parts by mass or more relative to 100 parts by mass of the macropolyol. Further, the low molecular weight polyol is used in an amount of 500 parts by mass or less, preferably 300 parts by mass or less, more preferably 150 parts by mass or less relative to 100 parts by mass of the macropolyol.

The proportion of the macropolyol relative to a total amount of the macropolyol and the low molecular weight polyol is, for example, 10% by mol or more, preferably 20% by mol or more. Further, the proportion of the macropolyol relative to the total amount of the macropolyol and the low molecular weight polyol is, for example, 80% by mol or less, preferably 65% by mol or less. The proportion of the low molecular weight polyol relative to the total amount of the macropolyol and the low molecular weight polyol is, for example, 20% by mol or more, preferably 35% by mol or more. Further, the proportion of the low molecular weight polyol relative to the total amount of the macropolyol and the low molecular weight polyol is, for example, 90% by mol or less, preferably 80% by mol or less.

When the proportions of the macropolyol and the low molecular weight polyol are within the above-described range, the fiber-reinforced resin sheet has excellent heat resistance and weather resistance, and further has excellent bendability and bending recovery.

Then, the thermoplastic polyurethane resin can be obtained by allowing the polyisocyanate component to react with the polyol component. Examples of the reaction method include one shot method and prepolymer method. Preferably, the prepolymer method is employed.

In the prepolymer method, first, the polyisocyanate component and the macropolyol are polymerized by a known polymerization method to synthesize an isocyanate group-terminated prepolymer (prepolymer synthesis step).

The amounts of the polyisocyanate component and the macropolyol blended are adjusted so that isocyanate groups of the polyisocyanate component are in excess relative to the hydroxy group of the macropolyol. More specifically, an equivalent ratio (isocyanate group/hydroxy group) of the isocyanate group in the polyisocyanate component to the hydroxy group in the macropolyol is, for example, 1.5 or more, preferably 1.8 or more, more preferably 2 or more, further preferably 2.5 or more. Further, the equivalent ratio (isocyanate group/hydroxy group) of the isocyanate group in the polyisocyanate component to the hydroxy group in the macropolyol is, for example, 10 or less, preferably 7 or less, more preferably 5 or less, further preferably 4.5 or less.

Examples of the polymerization method include bulk polymerization and solution polymerization. In the bulk polymerization, for example, the polyisocyanate component is allowed to react with the macropolyol under nitrogen flow. The reaction temperature is, for example, 50°C or more. Further, the reaction temperature is, for example, 250°C or less, preferably 200°C or less. The reaction time is, for example, 0.5 hours or more, preferably 1 hour or more. Further, the reaction time is, for example, 15 hours or less. In the solution polymerization, the polyisocyanate component is allowed to react with the macropolyol in the presence of a known organic solvent. The reaction temperature is, for example, 50°C or more. Further, the reaction temperature is, for example, 120°C or less, preferably 100°C or less. The reaction time is, for example, 0.5 hours or more, preferably 1 hour or more. Further, the reaction time is, for example, 15 hours or less.

As necessary, for example, a known urethanizing catalyst such as amines or organic metal compounds can be added. The amount of the urethanizing catalyst added is appropriately set in accordance with its purpose and use.

In this manner, a reaction mixture containing the isocyanate group-terminated prepolymer is obtained. The reaction mixture has an isocyanate group concentration of, for example, 1% by mass or more, preferably 3% by mass or more, more preferably 4% by mass or more. Further, the isocyanate group concentration of the reaction mixture is, for example, 30% by mass or less, preferably 19% by mass or less, more preferably 16% by mass or less, further preferably 15% by mass or less, further preferably 10% by mass or less. The isocyanate group concentration (isocyanate group content) can be determined by a known method such as titration with di-n-butylamine or FT-IR analysis.

The reaction mixture obtained by the above-described reaction can contain, in addition to the isocyanate group-terminated prepolymer, an unreacted polyisocyanate component (isocyanate monomer). As necessary, the unreacted polyisocyanate component is removed from the reaction mixture by a known removing method. Examples of the removing method include distillation and extraction.

The thermoplastic polyurethane elastomer is obtained by allowing the above-described isocyanate group-terminated prepolymer to react with a chain extender (chain extension step).

The chain extender contains, for example, a low molecular weight polyol, and preferably consists of a low molecular weight polyol.

The amounts of the isocyanate group-terminated prepolymer and the chain extender blended are appropriately set. For example, an equivalent ratio (isocyanate group/hydroxy group) of the isocyanate group in the isocyanate group-terminated prepolymer to the hydroxy group in the chain extender (low molecular weight polyol) is, for example, 0.75 or more, preferably 0.9 or more. Further, the equivalent ratio (isocyanate group/hydroxy group) of the isocyanate group in the isocyanate group-terminated prepolymer to the hydroxy group in the chain extender (low molecular weight polyol) is, for example, 1.3 or less, preferably 1.2 or less.

In the reaction of the isocyanate group-terminated prepolymer with the chain extender (low molecular weight polyol), for example, bulk polymerization and/or solution polymerization is/are employed. The reaction temperature is, for example, room temperature or more, preferably 50°C or more. Further, the reaction temperature is, for example, 200°C or less, preferably 150°C or less. The reaction time is, for example, 5 minutes or more, preferably 1 hour or more. Further, the reaction time is, for example, 72 hours or less, preferably 48 hours or less. During mixing of the isocyanate group-terminated prepolymer and the chain extender, as necessary, the urethanizing catalyst can be added in an appropriate amount.

In this manner, a thermoplastic polyurethane resin containing the reaction product of the isocyanate group-terminated prepolymer and the chain extender is obtained.

The thermoplastic polyurethane resin can contain a known additive. That is, the thermoplastic polyurethane resin may be a resin composition. Examples of the additive include an antioxidant, a heat-resistant stabilizer, an ultraviolet absorber, a weathering stabilizer, a light-resistant stabilizer, an antiblocking agent, a mold releasing agent, a pigment, a dye, a lubricant, a filler, a hydrolysis inhibitor, a rust inhibitor, and a bluing agent. The amount and timing of addition of the additive are appropriately set in accordance with its purpose and use.

The thermoplastic polyurethane resin is molded into a sheet form or a film form, for example, by a known method. Examples of the molding method include heat compression molding, injection molding, and extrusion molding, and preferably, extrusion molding is used. In the extrusion molding, for example, first, thermoplastic polyurethane is pelletized by a known method. Thereafter, the pellets of thermoplastic polyurethane are melted with a known extrusion molding device, and the melted pellets are extruded into a sheet form or a film form. In this manner, a sheet or film of thermoplastic polyurethane is obtained.

The thermoplastic polyurethane resin is subjected to a heat treatment as needed. Preferably, the pellets of thermoplastic polyurethane are subjected to a heat treatment. The heat treatment temperature is, for example, 50°C or more, preferably 80°C or more. Further, the heat treatment temperature is, for example, 200°C or less, preferably 150°C or less. The heat treatment time is, for example, 30 minutes or more, preferably 1 hour or more. Further, the heat treatment time is, for example, 30 hours or less, preferably 20 hours or less.

The thermoplastic polyurethane resin is aged as needed. Preferably, the sheet or film of thermoplastic polyurethane is aged. The aging temperature is, for example, 10°C or more, preferably 20°C or more. Further, the aging temperature is, for example, 50°C or less, preferably 40°C or less. The aging time is, for example, 1 hour or more, preferably 10 hours or more. Further, the aging time is, for example, 20 days or less, preferably 10 days or less.

The thermoplastic polyurethane resin has a hard segment concentration of, for example, 5% by mass or more, preferably 8% by mass or more, more preferably 11% by mass or more, further preferably 15% by mass or more. Further, the hard segment concentration of the thermoplastic polyurethane resin is, for example, 60% by mass or less, preferably 55% by mass or less, more preferably 50% by mass or less, further preferably 40% by mass or less. When the hard segment concentration of the thermoplastic polyurethane resin is within the above-described range, a fiber-reinforced resin sheet having excellent mechanical properties is obtained.

The hard segment of the thermoplastic polyurethane resin refers to a hard segment formed by reaction of the polyisocyanate component with the low molecular weight polyol. The hard segment concentration can be calculated by a known method, for example, based on the blending amount (preparation) of each component.

More specifically, the hard segment concentration can be calculated, for example, when the prepolymer method is employed, based on the blending formulation (preparation) of each component, using the following formula.

[Chain extender (g) + (chain extender (g)/molecular weight (g/mol) of chain extender) × average molecular weight (g/mol) of polyisocyanate component]/(polyisocyanate component (g) + total mass (g) of polyol component) × 100

The thermoplastic polyurethane resin has a urethane group concentration of, for example, 1.0 mmol/g or more, preferably 1.5 mmol/g or more, more preferably 1.7 mmol/g or more, further preferably 2.5 mmol/g or more. Further, the urethane group concentration of the thermoplastic polyurethane resin is, for example, 8.0 mmol/g or less, preferably 4.5 mmol/g or less, more preferably 3.4 mmol/g or less, further preferably 3.0 mmol/g or less. When the urethane group concentration of the thermoplastic polyurethane resin is within the above-described range, a fiber-reinforced resin sheet having excellent mechanical properties is obtained.

The urethane group concentration can be calculated based on the blending formulation (preparation) of each component using a known method.

The thermoplastic polyurethane resin has a calorific value at a recrystallization peak of the urethane group of, for example, 1 (mJ/mg) or more, preferably 3.5 (mJ/mg) or more. The calorific value at the recrystallization peak of the urethane group of the thermoplastic polyurethane resin is, for example, 40 (mJ/mg) or less, preferably 30 (mJ/mg) or less.

The calorific value at the recrystallization peak of the urethane group of the thermoplastic polyurethane resin is measured by differential scanning calorimetry (DSC measurement) in accordance with Example to be described later.

More specifically, in the differential scanning calorimetry (DSC measurement), among peaks appearing during lowering of the temperature that has increased to 270°C, an exothermic peak (recrystallization peak) at 50°C or more and 180°C or less is referred to as recrystallization peak of the urethane group. The peak width is referred to as exothermic section (°C). Further, the amount of heat (enthalpy change) (mJ/mg) at the recrystallization peak is referred to as calorific value at the recrystallization peak.

The thermoplastic polyurethane resin preferably satisfies the following formula (1). The following formula (1) is a formula expressing crystallinity of the thermoplastic polyurethane resin. The higher the value of the following formula (1) is, the higher the crystallinity is, and wrinkles are likely to occur due to bending, resulting in relatively low bending recovery. The lower the value of the following formula (1) is, the lower the crystallinity is, and wrinkles are less likely to occur due to bending, resulting in relatively high bending recovery.

$$\text{Formula (1): } 0 < [\text{Calorific value (mJ/mg) at recrystallization peak of urethane group/exothermic section (°C)}] < 0.85$$

The value of the above formula (1) for the thermoplastic polyurethane resin is, for example, above 0, preferably for example, 0.01 or more, preferably 0.02 or more. Further, the value of the above formula (1) for the thermoplastic polyurethane resin is, for example, 0.85 or less, preferably 0.45 or less, more preferably 0.20 or less. When the value of the above formula (1) is within the above-described range, a fiber-reinforced resin sheet having excellent bending recovery is obtained.

In the fiber-reinforced resin sheet, the thermoplastic polyurethane resin is impregnated in at least one surface of the fiber assembly of the reinforcing fiber.

The method for impregnating the fiber assembly of the reinforcing fiber with the thermoplastic polyurethane resin is not particularly limited, and a known method is employed. For example, first, a sheet or film of the thermoplastic polyurethane resin is formed. Then, the sheet or film of the thermoplastic polyurethane resin and the fiber assembly of the reinforcing fiber are pressure-bonded and heated.

The film of the thermoplastic polyurethane resin has a thickness of, for example, 50 $\mu$m or more, preferably 100 $\mu$m or more. Further, the thickness of the film of thermoplastic polyurethane resin is, for example, 1000 $\mu$m or less, preferably 500 $\mu$m or less.

The fiber assembly of the reinforcing fiber has a thickness of, for example, 50 $\mu$m or more, preferably 100 $\mu$m or more. Further, the thickness of the fiber assembly of the reinforcing fiber is, for example, 1000 $\mu$m or less, preferably 500 $\mu$m or less.

The film of the thermoplastic polyurethane resin and the fiber assembly of the reinforcing fiber are pressure-bonded and heated by a known heating/pressure bonding apparatus. Examples of the heating/pressure bonding apparatus include an autoclave apparatus and a hot press apparatus.

The pressure bonding conditions and the heating conditions are appropriately set in accordance with its purpose and use. The pressure for pressure bonding is, for example, 0.1 MPa or more, preferably 0.5 MPa or more. Further, the pressure for pressure bonding is, for example, 5.0 MPa or less, preferably 2.5 MPa or less. The heating temperature is, for example, 100°C or more, preferably 140°C or more, and for example, 300°C or less, preferably 240°C or less. The pressure bonding time and the heating time are, for example, 0.5 minutes or more, preferably 1 minute or more. Further, the pressure bonding time and the heating time are, for example, 30 minutes or less, preferably 10 minutes or less.

The environmental condition in the pressure bonding and heating may be an ambient pressure environment or a decompression environment. The decompression environment includes vacuum environment. For the environmental condition, preferably, a decompression environment is used. Under the decompression environment, the occurrence of air bubbles in the fiber-reinforced resin sheet can be prevented.

In this manner, the thermoplastic polyurethane resin is melted, and the fiber assembly including the reinforcing fiber is impregnated with the thermoplastic polyurethane resin. Thereafter, the thermoplastic polyurethane resin is cooled to room temperature.

Thus, the thermoplastic polyurethane resin can be impregnated in the fiber assembly of the reinforcing fiber while being melted. As a result of this, a fiber-reinforced resin sheet is obtained.

In the above-described method, the sheet or film of the thermoplastic polyurethane resin can be pressure bonded to and heated on only one surface of the fiber assembly of the reinforcing fiber. In this case, the thermoplastic polyurethane resin penetrates to a predetermined depth from one side to the other side in the thickness direction of the fiber assembly of the reinforcing fiber.

In the above-described method, the sheet or film of the thermoplastic polyurethane resin can be pressure bonded to and heated on both surfaces of the fiber assembly of the reinforcing fiber. In this case, the thermoplastic polyurethane resin penetrates to a predetermined depth from one side to the other side in the thickness direction of the fiber assembly of the reinforcing fiber. Along with this, the thermoplastic polyurethane resin penetrates to a predetermined depth from the other side to one side in the thickness direction of the fiber assembly of the reinforcing fiber.

Preferably, the sheet or film of the thermoplastic polyurethane resin is pressure bonded to and heated on both surfaces of the fiber assembly of the reinforcing fiber.

The thermoplastic polyurethane resin may or may not reach the other side from one side in the thickness direction of the fiber assembly of the reinforcing fiber. The penetration depth of the thermoplastic polyurethane resin is appropriately set depending on the thickness of the sheet or film of the thermoplastic polyurethane resin and the heating conditions during pressure bonding.

In other words, the thermoplastic polyurethane resin may be impregnated into the predetermined depth from one side in the thickness direction of the fiber assembly of the reinforcing fiber. That is, the other side in the thickness direction of the fiber assembly of the reinforcing fiber may not be impregnated with the thermoplastic polyurethane resin. Further, the central portion in the thickness direction of the fiber assembly of the reinforcing fiber may or may not be impregnated with the thermoplastic polyurethane resin. In view of bending recovery, preferably, the central portion in the thickness direction of the fiber assembly of the reinforcing fiber is not impregnated with the thermoplastic polyurethane resin. The impregnation state of the thermoplastic polyurethane resin is confirmed and determined, for example, by observing the cross section of the fiber-reinforced resin sheet with a scanning electron microscope.

During pressurizing, a release film can be placed on the outside of the film of the thermoplastic polyurethane resin. This achieves improvement of workability, and a fiber-reinforced resin sheet having excellent external appearance is obtained. Further, the surface shape of the release film can be processed as desired. For example, the surface of the release film can be subjected to emboss processing. This can achieve improvement of the external appearance of the fiber-reinforced resin sheet.

The fiber-reinforced resin sheet is aged as needed. The aging temperature is, for example, 40°C or more, preferably 80°C or more. Further, the aging temperature is, for example, 140°C or less, preferably 120°C or less. The aging time is, for example, 30 minutes or more, preferably 1 hour or more. Further, the aging time is, for example, 7 days or less, preferably 3 days or less.

The above-described fiber-reinforced resin sheet includes the thermoplastic polyurethane resin. The thermoplastic polyurethane resin contains a reaction product of a polyol component and a polyisocyanate component including a monocyclic alicyclic polyisocyanate. Therefore, the above-described fiber-reinforced resin sheet has excellent heat resistance and weather resistance.

As a result, the above-described fiber-reinforced resin sheet is suitably used in various industrial fields. Examples of the field in which the fiber-reinforced resin sheet is used include the fields of accessories, vehicles, furniture, sports, robots, office supplies, building construction, health care, and electricity. Preferably, the above-described fiber-reinforced resin sheet is used in the field of accessories. Examples of the accessories include bags, wallets, and business card holders.

Example

Next, the present invention is described with reference to Examples and Comparative Examples. The present invention is however not limited by the following Examples. The "parts" and "%" are based on mass unless otherwise specified. The specific numerical values in blending ratio (content ratio), property value, and parameter used in the following description can be replaced with upper limit values (numerical values defined as "or less" or "below") or lower limit values (numerical values defined as "or more" or "above") of corresponding numerical values in blending ratio (content ratio), property value, and parameter described in the above-described "DESCRIPTION OF THE EMBODIMENTS".

(1) Materials

<Polyisocyanate components>

·MDI: 4,4'-Diphenylmethane diisocyanate
·H$_{12}$MDI: 4,4'-Dicyclohexylmethane diisocyanate
·1,4-H$_6$XDI: 1,4-Bis(isocyanatomethyl)cyclohexane produced by a method described in Production Example 1 (described later), 86% by mol of trans isomer /14% by mol of cis isomer

<Macropolyols>

·PCL 210N: Polycaprolactone polyol, trade name PLACCEL 210N, number average molecular weight (Mn) 1000, average number of hydroxy groups 2, manufactured by Daicel Corporation
·PBA: Polybutylene adipate (polyester polyol), trade name TAKELAC U-2420, number average molecular weight (Mn) 2000, average number of hydroxy groups 2, manufactured by Mitsui Chemicals, Inc.
·PTG-1000: Crystalline polytetramethylene ether glycol, trade name PTG1000, number average molecular weight (Mn) 1000, average number of hydroxy groups 2, manufactured by Korea PTG
·PTG-1400: Crystalline polytetramethylene glycol, trade name PTG-1400, number average molecular weight (Mn) 1400, average number of hydroxy groups 2, manufactured by Korea PTG
·PTG-L3500: Amorphous polytetramethylene glycol, trade name PTG-L3500, number average molecular weight (Mn) 3500, average number of hydroxy groups 2, manufactured by Hodogaya Chemical Co., Ltd.
·UH-100: Crystalline polycarbonate diol, trade name UH-100, number average molecular weight (Mn) 1000, average number of hydroxy groups 2, manufactured by Ube Industries Ltd.
·UH-200: Crystalline polycarbonate diol, trade name UH-200, number average molecular weight (Mn) 2000, average number of hydroxy groups 2, manufactured by Ube Industries Ltd.
·UP-100: Amorphous polycarbonate diol, trade name UP-100, number average molecular weight (Mn) 1000, average number of hydroxy groups 2, manufactured by Ube Industries Ltd.
·UP-200: Amorphous polycarbonate diol, trade name UP-200, number average molecular weight (Mn) 2000, average number of hydroxy groups 2, manufactured by Ube Industries Ltd.

<Low molecular weight polyol>

·1,4-BD: 1,4-Butanediol, manufactured by Mitsubishi Chemical Corporation

<Catalyst>

• U-100: Dibutyl tin dilaurylate, trade name NEOSTANN U-100, manufactured by Nitto Chemical Industry Co.

<Catalyst diluent>

·DINA: Diisononyl adipate, trade name DINA, manufactured by DAIHACHI CHEMICAL INDUSTRY CO., LTD.

<Additives>

·Antioxidant: Hindered phenol compound, trade name IRGANOX 245, manufactured by BASF Japan Ltd.
·Ultraviolet absorber: Benzotriazole compound, trade name TINUVIN 571, manufactured by BASF Japan Ltd.

·Weathering stabilizer: Hindered amine compound, trade name ADK STAB LA-72, manufactured by ADEKA Corporation

(2) 1,4-H$_6$XDI

Production Example 1 1,4-bis(isocyanatomethyl)cyclohexane

1,4-Bis(isocyanatomethyl)cyclohexane (1,4-H$_6$XDI) was obtained in accordance with the description of Production Example 3 in International Publication No. WO 2019/069802. As a result of measuring the purity of 1,4-H$_6$XDI by a gas chromatograph, the purity was 99.9%. A hue as measured by APHA was 5. A ratio of the trans isomer to the cis isomer measured by $^{13}$C-NMR was 86% by mol of the trans isomer to 14% by mol of the cis isomer.

(3) Thermoplastic polyurethane resin

Synthesis Examples 1 to 12

The macropolyol described in Table 1 and the above-described additives were mixed. To 100 parts by mass of the macropolyol, 0.3 parts by mass of the antioxidant, 0.3 parts by mass of the ultraviolet absorber, 0.3 parts by mass of the weathering stabilizer were added, and the total amount of these additives was 0.9% by mass relative to the final mass of the thermoplastic polyurethane resin. Then, a vessel in which nitrogen was encapsulated was charged with the mixture of the macropolyol and the additive, and then heated at 100°C for 12 hours.
On the other hand, a catalyst solution was prepared by diluting U-100 (catalyst) to 4% by mass with DINA (catalyst diluent).
A vessel equipped with a stirrer, a thermometer, and a nitrogen inlet tube was charged with the polyisocyanate component and the mixture of the macropolyol and the additive in the combination listed in Table 1. These were stirred for 5 minutes in a hot water bath at 85°C under a nitrogen atmosphere. For stirring, a high-speed stirring disperser was used. The rotation speed was from 500 to 700 rpm. Thus, an isocyanate group-terminated prepolymer was obtained.
Then, the low molecular weight polyol as a chain extender was added to the isocyanate group-terminated prepolymer. These were stirred until the temperature reached 90°C. For stirring, a high-speed stirring disperser was used. In the course of stirring with the high-speed disperser, the catalyst solution was added in an appropriate amount.
Then, the mixture of the isocyanate group-terminated prepolymer and the chain extender was poured into a Teflon (registered trademark) vat and then subjected to a urethane-forming reaction at 150°C for 2 hours. The reaction was then continued at 100°C for 20 hours. Thus, a thermoplastic polyurethane resin was obtained.
Then, the thermoplastic polyurethane resin was removed from the vat and cut into dice with a bale cutter. The diced resin was then ground with a grinder. Thus, ground pellets were obtained. Then, the ground pellets were subjected to a heat treatment at 80°C for 5 days, and then dried at 80°C for 12 hours under vacuum-reduced pressure. Thereafter, the ground pellets were charged into a single screw extruder (type: SZW20-25MG, manufactured by TECHNOVEL CORPORATION), and a strand was extruded under conditions of a screw rotation speed of 30 rpm and a cylinder temperature of 140 to 240°C. Thereafter, the strand was cut to thereby obtain pellets of thermoplastic polyurethane resin.
Then, the pellets of thermoplastic polyurethane resin were used to obtain a film of thermoplastic polyurethane resin. More specifically, the pellets of thermoplastic polyurethane resin were dried at 80°C for 12 hours under vacuum-reduced pressure. Then, the pellets of thermoplastic polyurethane resin were charged into a single screw extruder (type: SZW20-25MG, manufactured by TECHNOVEL CORPORATION), the thermoplastic polyurethane resin was extruded from a T-die under conditions of a screw rotation speed of 20 rpm and a cylinder temperature of 140 to 240°C, and the extruded resin was taken in by a conveyor belt. Thus, a 150 μm-thick film (hereinafter referred to as polyurethane film) was obtained. Thereafter, the polyurethane film was aged for 7 days under constant temperature/humidity conditions of a room temperature of 23°C and a relative humidity of 55%.

(4) Physical properties of polyurethane

<Hard segment concentration, urethane group concentration>

The hard segment concentration of the thermoplastic polyurethane resin was calculated from the blending ratio (preparation) of each component using the following formula.

Formula: [Chain extender (g) + (chain extender (g)/molecular weight (g/mol) of chain extender) × average molecular weight (g/mol) of polyisocyanate component]/(polyisocyanate component (g) + total mass (g) of polyol component) × 100

The urethane group concentration (mmol/g) was calculated based on the blending formulation (preparation) of each component.

<Calorific value/exothermic section>

Using a differential scanning calorimeter (DSC7000X, manufactured by Hitachi High-Tech Science Corporation), the amount of heat of fusion of the thermoplastic polyurethane resin was measured as follows.

That is, approximately 10 mg of the thermoplastic polyurethane resin was collected in an aluminum pan. This aluminum pan was covered and crimped, and the resulting product was used as a measurement sample (sample). Similarly, alumina was collected and then used as a reference sample.

Thereafter, the sample and the reference were set in place in a cell, and then cooled from 20°C to -100°C at a rate of 10 °C/min under nitrogen flow (flow rate: 30 NmL/min). Then, after being kept at the same temperature for 5 minutes, these samples were heated to 270°C at a rate of 10 °C/min, and thereafter cooled to -70°C at a rate of 10 °C/min.

Among peaks appearing during lowering of the temperature from 270°C to -70°C, an exothermic peak (recrystallization peak) at 50°C or more and 180°C or less was determined as a recrystallization peak of the urethane group. The peak width was referred to as exothermic section (°C). Further, the amount of heat (enthalpy change) (mJ/mg) at the recrystallization peak was measured.

The value of the following formula was calculated from the caloric value (mJ/mg) at the recrystallization peak of the urethane group and the exothermic section (°C).

[Calorific value (mJ/mg) at recrystallization peak of urethane group/exothermic section (°C)]

(5) Fiber-reinforced resin sheet

Examples 1 to 10 and Comparative Examples 1 to 2

The fiber assembly containing the reinforcing fiber described in Table 1 was prepared. More specifically, EC3C (manufactured by FORMOSA TAFFETA CO., LTD.), which is a woven fabric consisting of carbon fiber, was prepared as a fiber assembly consisting of carbon fiber. In addition, EC01 (manufactured by FORMOSA TAFFETA CO., LTD.), which is a woven fabric consisting of carbon fiber and aramid fiber, was prepared as a fiber assembly consisting of carbon fiber and aramid fiber.

The fiber assembly was sandwiched between polyurethane films on both sides, and using a heat pressing machine (KANSAI ROLL Co., Ltd., two-stage heating and cooling press machine), the fiber assembly and the polyurethane films were heated to the temperatures listed in Table 1 and pressurized at 2.5 MPa for 5 minutes. For pressurizing, a TPX (registered trademark, polymethylpentene) film or a Teflon (registered trademark) film as a release film was placed on the outside of the polyurethane films.

Thus, the polyurethane films were melted, and the thermoplastic polyurethane resin was impregnated from both sides in the thickness direction of the fiber assembly. Thereafter, the temperature of the fiber assembly impregnated with the thermoplastic polyurethane resin was lowered to 25°C. Thus, a fiber-reinforced resin sheet was obtained.

(6) Evaluation

<Heat resistance : Storage modulus (E')>

A dynamic viscoelastic spectrum of a 150 $\mu$m film of thermoplastic polyurethane resin was measured on the following conditions:

Apparatus: Dynamic viscoelastic analyzer (DVA-220, manufactured by IT Measurement Control Co., Ltd.)

Measurement temperature: -100°C to 250°C
Heating rate: 5 °C/min
Mode: Tension mode
Gauge length: 20 mm
Static/Dynamic stress ratio: 1.8
Measurement frequency: 10 Hz

Thereafter, a temperature at which the storage modulus E' became $1 \times 10^6$ was calculated. Then, the heat resistance was evaluated in accordance with the following evaluation criteria.

Excellent: The temperature at which the storage modulus E' became $1 \times 10^6$ was 140°C or more.
Good: The temperature at which the storage modulus E' became $1 \times 10^6$ was 130°C or more and less than 140°C.
Bad: The temperature at which the storage modulus E' became $1 \times 10^6$ was less than 130°C.

<UV resistance>

A test piece having a size of $20 \times 60$ mm was cut out from a polyurethane film having a thickness of 150 $\mu$m. Then, the test piece was set in a QUV weathering tester (manufactured by Suga Test Instruments Co., Ltd., fluorescent weather meter FUV) equipped with an ultraviolet ray fluorescent lamp. The test piece was exposed to conditions 1 and 2. The exposure time for each condition was 4 hours. The exposures were alternately repeated for 6 cycles, that is, 48 hours.

(Condition 1) Temperature: 60°C, relative humidity: 10%, wavelength of ultraviolet rays: 270 to 720 mm, irradiation intensity: 28 W/m$^2$
(Condition 2) Temperature: 50°C, relative humidity: 95%, without irradiation with ultraviolet rays

Thereafter, b value of the polyurethane film was measured using a color difference meter (manufactured by Tokyo Denshoku CO., LTD., COLOR ACE MODEL TC-1). An amount of change in the b value, $\Delta$b, before and after the test was calculated. The weather resistance (UV resistance) was evaluated in accordance with the following evaluation criteria.

Excellent: $\Delta$b was 0 or more and less than 3.
Good: $\Delta$b was 3 or more and less than 10.
Bad: $\Delta$b was 10 or more.

<Transparency>

A test piece having a size of $20 \times 60$ mm was cut out from a polyurethane film having a thickness of 150 $\mu$m. Haze of the test piece was measured using a haze meter (manufactured by Nippon Denshoku Industries, Co., Ltd., NDH 2000). The transparency was evaluated in accordance with the following evaluation criteria.

Excellent: Haze was 0 or more and less than 15.
Good: Haze was 15 or more and less than 75.
Bad: Haze was 75 or more.

<Bending recovery>

The fiber-reinforced resin sheet was folded in a direction of 45°C relative to the weaving direction of the woven fabric. Then, a load of 1 kg/cm$^3$ was applied to the fold. After 5 seconds, the load was removed. The bending recovery was evaluated in accordance with the following evaluation criteria.

Score 5: Within 1 hour, the sheet became flat, and the fold was no longer visually or tactually discernible.
Score 4: After 1 hour but within 24 hours, the sheet became flat, and the fold was no longer visually discernible.
Score 3: Within 24 hours, the sheet became flat, but after 24 hours, the fold was no longer visually discernible.
Score 2: After 24 hours, the sheet did not become flat, but lifting of fibers and resin did not occur at the fold.
Score 1: After 24 hours, the sheet did not become flat, and lifting of fibers and resin occurred at the fold.

impregnation state>

The fiber-reinforced resin sheet was cut along the thickness direction, and its cross section was observed with a scanning electron microscope (VHX-D510, manufactured by Keyence). Thus, the impregnation state of the thermoplastic polyurethane resin in the fiber assembly was confirmed and evaluated. As a result, in any of Examples 1 to 10 and Comparative Examples 1 to 2, the central portion in the thickness direction of the fiber assembly was not impregnated with the thermoplastic polyurethane resin.

[Table 1]

TABLE 1

| No | | | Comp. Ex. 1 | Comp. Ex. 2 | Ex. 1 | Ex. 2 | Ex. 3 | Ex. 4 | Ex. 5 | Ex. 6 | Ex. 7 | Ex. 8 | Ex. 9 | Ex. 10 |
|---|---|---|---|---|---|---|---|---|---|---|---|---|---|---|
| | | | Syn. Ex. 1 | Syn. Ex. 2 | Syn. Ex. 3 | Syn. Ex. 4 | Syn. Ex. 5 | Syn. Ex. 6 | Syn. Ex. 7 | Syn. Ex. 8 | Syn. Ex. 9 | Syn. Ex. 10 | Syn. Ex. 11 | Syn. Ex. 12 |
| Blending formulation (molar ratio) | Polyisocyanate component | HI2MOI | 307 | - | - | - | - | - | - | - | - | - | - | - |
| | | MDI | - | 519 | - | - | - | - | - | - | - | - | - | - |
| | | 1.4-H6xDI | - | - | 218 | 161 | 161 | 162 | 232 | 298 | 710 | 224 | 410 | 173 |
| | Macropolyol | PCL 210N | 100 | - | 100 | - | - | - | - | - | - | - | - | - |
| | | PBA | | 100 | - | - | - | - | - | - | - | - | - | - |
| | | PTG-1000 | - | - | - | 100 | 100 | - | - | 100 | 100 | - | - | - |
| | | PTG-1400 | - | - | - | - | - | 100 | - | - | - | - | - | - |
| | | PTG-L3500 | - | - | - | - | - | - | - | - | - | - | 100 | - |
| | | UH-100 | - | - | - | - | - | - | 50 | - | - | - | - | - |
| | | UH-200 | - | - | - | - | - | - | 50 | | - - - | - | - | - |
| | | UP-100 | - | - | - | - | - | - | - | - | - | - | - | 100 |
| | | UP-200 | - | - | - | - | - | - | - | - | - | 100 | - | - |
| | Low molecular weight diol | 1.4-BD | 207 | 419 | 118 | 63 | 63 | 62 | 131 | 198 | 622 | 124 | 323 | 73 |
| Equivalent ratio | | NCO/OH | 1.00 | 100 | 1.00 | 0.99 | 0.99 | 1.00 | 1.01 | 1.00 | 0.98 | 1.00 | 0.97 | 1.00 |

(continued)

| No | | | Comp. Ex. 1 | Comp. Ex. 2 | Ex. 1 | Ex. 2 | Ex. 3 | Ex. 4 | Ex. 5 | Ex. 6 | Ex. 7 | Ex. 8 | Ex. 9 | Ex. 10 |
|---|---|---|---|---|---|---|---|---|---|---|---|---|---|---|
| | | | Syn. Ex. 1 | Syn. Ex. 2 | Syn. Ex. 3 | Syn. Ex. 4 | Syn. Ex. 5 | Syn. Ex. 6 | Syn. Ex. 7 | Syn. Ex. 8 | Syn. Ex. 9 | Syn. Ex. 10 | Syn. Ex. 11 | Syn. Ex. 12 |
| Physical properties | Hard segment concentration | % by mass | 49 | 39 | 22 | 13 | 13 | 9.9 | 18 | 32 | 53 | 14 | 20 | 15 |
| | Urethane group concentration | mmol/g | 2.05 | 1.41 | 2.85 | 2.3 | 2.3 | 1.83 | 2.25 | 3.39 | 4.25 | 1.78 | 1.786 | 2.51 |
| | Calorific value/ exothermic section | (mJ/mg)/ °C | 0 | 0.33 | 0.35 | 0.22 | 0.22 | 0.08 | 0.24 | 0.47 | 0.81 | 0.08 | 0.19 | 0.06 |
| Fiber-reinforced resin sheet | Molding temperature | °C | 130 | 185 | 170 | 150 | 150 | 140 | 175 | 195 | 215 | 150 | 180 | 150 |
| | Woven fabric | Type | EC3C | EC3C | EC3C | EC3C | EC01 | EC3C | EC3C | EC3C | EC3C | EC3C | EC3C | EC3C |
| Evaluation | Temperature at whith E' becomes $10^6$ | °C | 123 | 180 | 165 | 144 | 144 | 133 | 178 | 190 | 208 | 139 | 180 | 141 |
| | Heat resistance | | Bad | Excellent | Excellent | Excellent | Excellent | Good | Excellent | Excellent | Excellent | Excellent | Excellent | Excellent |
| | Weather resistance | | Excellent | Bad | Excellent | Excellent | Excellent | Excellent | Excellent | Excellent | Excellent | Excellent | Excellent | Excellent |
| | Haze | | Excellent | Excellent | Excellent | Excellent | Excellent | Excellent | Excellent | Excellent | Excellent | Good | Bad | Excellent |
| | Bending recovery | | 5 | 4 | 3 | 3 | 3 | 4 | 3 | 3 | 2 | 5 | 4 | 5 |

While the illustrative embodiments of the present invention are provided in the above-described invention, such is for illustrative purpose only and it is not to be construed restrictively. Modification and variation of the present invention that will be obvious to those skilled in the art is to be covered by the following claims.

Industrial Applicability

The fiber-reinforced resin sheet of the present invention is suitably used in the fields of accessories, vehicles, furniture, sports, robots, office supplies, building construction, health care, and electricity.

**Claims**

1. A fiber-reinforced resin sheet comprising

    a fiber assembly comprising a reinforcing fiber; and a thermoplastic polyurethane resin impregnated in at least one surface of the fiber assembly,
    wherein the thermoplastic polyurethane resin comprises a reaction product of a polyol component and a polyisocyanate component comprising a monocyclic alicyclic polyisocyanate.

2. The fiber-reinforced resin sheet according to claim 1, wherein the monocyclic alicyclic polyisocyanate comprises 1,4-bis(isocyanatomethyl)cyclohexane and/or 1,3-bis(isocyanatomethyl)cyclohexane.

3. The fiber-reinforced resin sheet according to claim 1, wherein the 1,4-bis(isocyanatomethyl)cyclohexane and/or the 1,3-bis(isocyanatomethyl)cyclohexane contain(s) a trans isomer in a proportion of 80% by mol or more.

4. The fiber-reinforced resin sheet according to claim 1, wherein the polyol component has a number average molecular weight of 400 or more and 3000 or less.

5. The fiber-reinforced resin sheet according to claim 1, wherein the thermoplastic polyurethane resin has a hard segment concentration of 8% by mass or more and 55% by mass or less.

6. The fiber-reinforced resin sheet according to claim 1, wherein the thermoplastic polyurethane resin has a urethane group concentration of 1.7 mmol/g or more and 4.5 mmol/g or less.

7. The fiber-reinforced resin sheet according to claim 1, wherein the thermoplastic polyurethane resin satisfies the following formula (1).

$$\text{Formula (1): } 0 < [\text{Calorific value (mJ/mg) at recrystallization peak of urethane group/exothermic section (°C)}] < 0.85$$

8. The fiber-reinforced resin sheet according to claim 1, wherein the reinforcing fiber comprises carbon fiber and/or aramid fiber.

## INTERNATIONAL SEARCH REPORT

| International application No. |
|---|
| **PCT/JP2022/016618** |

| **A.** | **CLASSIFICATION OF SUBJECT MATTER** |
|---|---|

*C08J 5/04*(2006.01)i; *C08G 18/40*(2006.01)i; *C08G 18/75*(2006.01)i; *B29C 70/06*(2006.01)i
FI:   C08J5/04 CFF; B29C70/06; C08G18/75 010; C08G18/40

According to International Patent Classification (IPC) or to both national classification and IPC

| **B.** | **FIELDS SEARCHED** |
|---|---|

Minimum documentation searched (classification system followed by classification symbols)

C08J5/04; C08G18/40; C08G18/75; B29C70/06

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

| **C.** | **DOCUMENTS CONSIDERED TO BE RELEVANT** |
|---|---|

| Category* | Citation of document, with indication, where appropriate, of the relevant passages | Relevant to claim No. |
|---|---|---|
| X | WO 2017/014178 A1 (MITSUI CHEMICALS INC.) 26 January 2017 (2017-01-26)<br>claims, paragraphs [0051]-[0079], [0198]-[0259], examples | 1-8 |
| X | WO 2018/168729 A1 (ADVANCED SOFTMATERIALS INC.) 20 September 2018 (2018-09-20)<br>claims, paragraphs [0068]-[0089], examples | 1-4, 7 |
| X | JP 64-069342 A (ASHLAND OIL, INC.) 15 March 1989 (1989-03-15)<br>claims, p. 8, upper left column, line 6 to p. 15, lower left column, line 11, examples | 1, 4-7 |
| A | JP 2020-128510 A (JAPAN U-PICA CO., LTD.) 27 August 2020 (2020-08-27)<br>claims, examples, entire text | 1-8 |
| A | WO 2019/069802 A1 (MITSUI CHEMICALS INC.) 11 April 2019 (2019-04-11)<br>claims, examples, entire text | 1-8 |

☐ Further documents are listed in the continuation of Box C.      ☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
|---|---|
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **31 May 2022** | **14 June 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
**Information on patent family members**

International application No.

**PCT/JP2022/016618**

| Patent document cited in search report | | | Publication date (day/month/year) | Patent family member(s) | | | Publication date (day/month/year) |
|---|---|---|---|---|---|---|---|
| WO | 2017/014178 | A1 | 26 January 2017 | US | 2018/0208708 | A1 | |
| | | | | claims, paragraphs [0052]-[0080], [0199]-[0294], examples | | | |
| | | | | EP | 3327058 | A1 | |
| | | | | CN | 107735421 | A | |
| | | | | TW | 201708294 | A | |
| WO | 2018/168729 | A1 | 20 September 2018 | (Family: none) | | | |
| JP | 64-069342 | A | 15 March 1989 | US | 4923756 | A | |
| | | | | claims, column 8, line 9 to column 18, line 40, examples | | | |
| | | | | US | 5143996 | A | |
| | | | | EP | 304083 | A2 | |
| | | | | KR | 10-1989-0003914 | A | |
| JP | 2020-128510 | A | 27 August 2020 | WO | 2020/166441 | A1 | |
| | | | | EP | 3925995 | A1 | |
| | | | | claims, examples | | | |
| | | | | KR | 10-2021-0126600 | A | |
| | | | | TW | 202104344 | A | |
| WO | 2019/069802 | A1 | 11 April 2019 | CN | 111065666 | A | |
| | | | | KR | 10-2020-0041348 | A | |
| | | | | TW | 201922834 | A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2016179667 A
- WO 2009051114 A
- WO 2019069802 A